# EUROPÄISCHE PATENTSCHRIFT

(11) **EP 2 649 710 B1**
(45) Veröffentlichungstag und Bekanntmachung des Hinweises auf die Patenterteilung: **22.10.2014**
(21) Anmeldenummer: 11791583.5
(22) Anmeldetag: 08.12.2011
(51) Int. Cl.: H02K 15/02, H02K 15/04, H02K 15/12, H02K 1/14

(54) **VERFAHREN ZUR HERSTELLUNG EINES STATORS**
METHOD FOR PRODUCING A STATOR
PROCÉDÉ DE FABRICATION D'UN STATOR

(30) Priorität: 10.12.2010 DE 102010054176
(43) Veröffentlichungstag der Anmeldung: 16.10.2013
(73) Patentinhaber: Continental Automotive GmbH, 30165 Hannover (DE)
(72) Erfinder: BRANDAU, Rüdiger, 36211 Alheim (DE); SIEBALD, Kurt, 36199 Rotenburg (DE)
(86) Internationale Anmeldenummer: PCT/EP2011/072178
(87) Internationale Veröffentlichungsnummer: WO 2012/076644

(56) Entgegenhaltungen:
- JP-A- 8 265 995
- JP-A- 2008 236 921
- JP-A- 2009 261 150

## Beschreibung

Die vorliegende Erfindung betrifft ein Verfahren zur Herstellung eines Stators für eine elektrische Maschine als Innenläufer, insbesondere einen Elektromotor, mit den Merkmalen des Oberbegriffes von Patentanspruch 1.

Standardmäßig werden Statoren aus einem Paket von übereinander angeordneten Blechringen hergestellt. Diese Blechringe bilden zusammen ein festes Bauteil, das in nachfolgenden Schritten isoliert und bewickelt wird.

Es ist aber auch bereits bekannt geworden (DE 20 2010 003 640 U1), einzelne Polzähne mit Spulenkörpern zu versehen und diese entsprechend zu bewickeln. Auf diese Weise werden einzelne Elektromaschinenspulen hergestellt, die aus einem Polzahn, einem Spulenkörper und einer Wicklung bestehen. Dabei können mehrere dieser Elektromaschinenspulen zu einem Stator zusammengesetzt werden, wobei vorgesehen ist, dass die Elektromaschinenspulen ringförmig um die Statorzentralachse angeordnet werden. Über die Verbindung der einzelnen Elektromaschinenspulen ist in dieser Veröffentlichung jedoch nichts ausgesagt.

Ein Verfahren mit den Merkmalen des Oberbegriffes des Patentanspruches 1 ist aus der JP 2008-236 921 A bekannt.

Aus der DE 10 2007 006 095 A1 ist es bekannt, einen temporären Befestigungsring an der Außenumfangsfläche eines Stators zu befestigen. Der temporäre Befestigungsring soll verhindern, dass eine Bewegung der einzelnen Teilkerne in radialer Richtung während des Formgebungsprozesses der Verbindungsdrähte auftritt.

Aus der JP 2009 26 1150 A ist ein Verfahren zur Herstellung eines Stators bekannt, bei dem die Polzähne vor dem Einbringen in die Spritzgießform in einem Kreis arrangiert werden. Es wird in dieser Veröffentlichung jedoch nicht erläutert, wie die Polzähne im Kreis gehalten werden.

Der vorliegenden Erfindung liegt die Aufgabe zugrunde, ein Verfahren zur Herstellung eines Stators zu schaffen, mit dem sich ein Stator mit kompakter Bauform herstellen lässt, der sich durch besonders gute Isolationseigenschaften auszeichnet.

Diese Aufgabe wird erfindungsgemäß bei einem Verfahren der angegebenen Art durch die kennzeichnenden Merkmale von Patentanspruch 1 gelöst.

Bei der erfindungsgemäß durchgeführten Statorherstellung wird somit von separaten Polzähnen ausgegangen, die mit Wicklungen versehen werden, um entsprechende Spulen herzustellen. Aus mehreren Spulen wird dann durch Verbinden der Wicklungsdrahtenden eine flexible ringförmige Polzahn-Baugruppe (Spulen-Baugruppe) hergestellt, welche dann in eine Spritzgießform eingeführt, dort zentriert und mit einer Kunststoffmasse umgossen wird. Beim Spritzgießen werden die Bereiche zwischen den Polzähnen (zwischen den entsprechenden Wicklungen der Polzähne) vergossen. Ferner werden die Bereiche über und unter den Polzähnen vergossen, so dass sich ein starres Gesamtgebilde ergibt. Die flexible ringförmige Polzahn-Baugruppe mit den zugehörigen Wicklungen wird auf diese Weise - abgesehen von den Außenflächen der beiden Stirnwände (der inneren und äußeren Stirnwand) - vollständig verkapselt. Es wird ein Kunststoffgerüst gebildet, das sich aus einer oberen und einer unteren Endwand sowie einer Vielzahl von stegartigen Zwischenwänden zusammensetzt, in das die Polzahn-Baugruppe eingebettet ist.

Mit der erfindungsgemäßen Vorgehensweise lässt sich ein hohes Magnetfeld bei einem entsprechend kleinen Bauraum erreichen. Dadurch, dass die Polzähne einzeln bewickelt werden und die entsprechende Polzahn-Baugruppe zusammengefügt wird, ist nur noch ein geringer Hohlraum zwischen den Wicklungen benachbarter Polzähne vorhanden, der dann durch den Spritzgießprozess mit Kunststoffmasse gefüllt wird. Insgesamt werden hierdurch besonders gute Isolationseigenschaften des hergestellten Stators erreicht.

Die flexible ringförmige Polzahn-Baugruppe wird durch die Anbringung eines Außenringes stabilisiert. Mit Hilfe eines solchen Außenringes lässt sich die Baugruppe auf gerichtete Weise in die Spritzgießform einführen, insbesondere im Bestückungswerkzeug der Spritzgießform anordnen und anschließend gerichtet in die Form einführen. Das anschließende Zentrieren kann beispielsweise mit Hilfe von Formschiebern beim Schließen der Spritzgießform erfolgen. Auf diese Weise kann die Baugruppe auch auf den gewünschten Durchmesser gebracht werden. Nach dem Einführen der Polzahn-Baugruppe in die Spritzgießform wird der aufgebrachte Außenring wieder entfernt.

Bei dem erfindungsgemäßen Verfahren finden Polzähne Verwendung, die formschlüssig aneinander gesetzt werden, um eine Verschiebesicherung zu erreichen. So werden die Polzähne einer Polzahn-Baugruppe über Nut-Feder-Verbindungen formschlüssig miteinander verbunden, nachdem sie in der Spritzgießform zentriert und auf den gewünschten Durchmesser gebracht worden sind. Auf diese Weise wird eine Fixierung der Polzähne vor dem Vergießen der Kunststoffmasse erreicht.

In Weiterbildung des erfindungsgemäßen Verfahrens wird die Vielzahl der Polzähne vor dem Wickeln zur Isolation mit mindestens einer Schutzkappe versehen. Vorzugsweise finden pro Polzahn diverse Schutzkappen Verwendung. Diese Kappen schützen gegen einen Kurzschluss der zugehörigen Spannungsversorgung.

Die Wicklungsenden der Polzähne werden vorzugsweise über einen Schweißprozess miteinander verbunden. Wichtig ist, dass die Polzähne nur über die Wicklungsdrahtenden miteinander verbunden werden, damit die hergestellte Polzahn-Baugruppe eine ausreichende Flexibilität aufweist. Auf diese Weise kann die Polzahn-Baugruppe nach dem Einbringen in die Spritzgießform ohne Weiteres auf den gewünschten Durchmesser gebracht werden, beispielsweise durch Druckausübung in Radialrichtung.

Bei einer anderen Ausführungsform des erfindungsgemäßen Verfahrens wird die Vielzahl der Polzähne vor dem Wickeln zur Isolation mit einer Überspritzung versehen. Diese Verfahrensweise kann beispielsweise anstelle der vorstehend erwähnten Verwendung von Schutzkappen Anwendung finden, um eine Sicherung gegen Kurzschlüsse der zugehörigen Spannungsversorgung zu erreichen. Für solche Überspritzungen können entsprechende isolierende Lacke auf Kunststoffbasis verwendet werden.

Das erfindungsgemäße Verfahren wird nachfolgend anhand eines Ausführungsbeispiels in Verbindung mit der Zeichnung im Einzelnen erläutert. Es zeigen:
- Figur 1: eine räumliche Ansicht eines Polzahnes, der bei dem erfindungsgemäßen Verfahren Verwendung findet;
- Figur 2: eine räumliche Ansicht von mehreren mit Kunststoffkappen versehenen und bewickelten Polzähnen vor dem Zusammenstellen zu einer Polzahn-Baugruppe;
- Figur 3: die Polzähne der Figur 2 nach dem Zusammenstellen zu einer Polzahn-Baugruppe;
- Figur 4: eine schematische räumliche Darstellung, teilweise geschnitten, einer Spritzgießform mit zugehörigen Formschiebern und einer eingeführten Polzahn-Baugruppe;
- Figur 5: einen Querschnitt durch eine Polzahn-Baugruppe nach dem Bringen auf den gewünschten Durchmesser und vor dem Spritzgießen; und
- Figur 6: einen Längsschnitt durch einen fertigen, mit einer Umspritzung versehenen Stator.

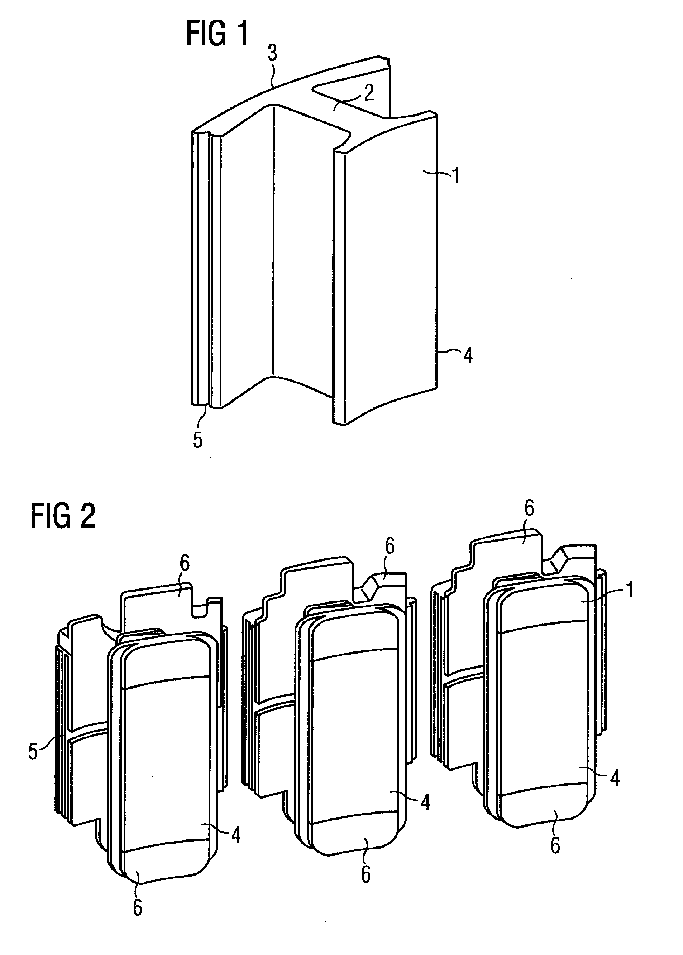

Bei dem erfindungsgemäßen Verfahren wird eine Vielzahl von Polzähnen 1 der in Figur 1 gezeigten Art bereitgestellt. Diese Polzähne sind im Querschnitt etwa doppel-T-förmig ausgebildet und besitzen eine erste (innere) Stirnwand 4, eine zweite (äußere) Stirnwand 3 und einen die Stirnwände 4, 3 miteinander verbindenden Polzahnsteg 2. An einem Ende der äußeren Stirnwand 3 ist eine Nut 5 vorgesehen, während das gegenüberliegende Ende eine entsprechend ausgebildete Feder aufweist. Nut und Feder dienen zum formschlüssigen Aneinandersetzen von mehreren Polzähnen.

Die Polzähne 1 bestehen aus einem Stanzpaket (aus übereinander angeordneten einzelnen Blechlagen) und werden zu Isolationszwecken mit diversen Schutzkappen auf dem Paket bestückt.

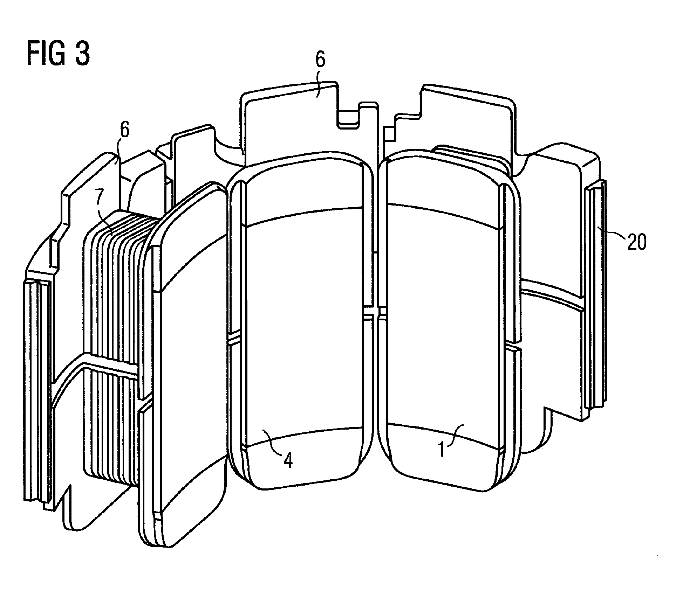

Figur 2 zeigt derartige Schutzkappen 6. Diese Kappen schützen gegen Kurzschlüsse der Spannungsversorgung. Die Polzähne 1 werden dann bewickelt. Entsprechende Wicklungen sind in Figur 3 mit 7 bezeichnet. Das Wickeln der Polzähne kann dabei einzeln oder parallel erfolgen. Die entsprechenden Wicklungsdrähte werden dann über einen Schweißprozess miteinander verbunden, so dass eine flexible Baugruppe 20 erhalten wird, wie in Figur 3 gezeigt.

Figur 3 zeigt eine flexible Polzahn-Baugruppe 20 mit lediglich drei Polzähnen 1. Es versteht sich jedoch, dass eine flexible Polzahn-Baugruppe 20 in der Form eines geschlossenen Ringes ausgebildet wird. Zur Stabilisierung wird die flexible ringförmige Polzahn-Baugruppe 20 in einem Außenring (nicht gezeigt) angeordnet und in diesem fixiert. Mit diesem Ring wird die Baugruppe im Bestückungswerkzeug einer Spritzgießform 8 angeordnet und hiermit auf gerichtete Weise in die Spritzgießform 8 eingeführt.

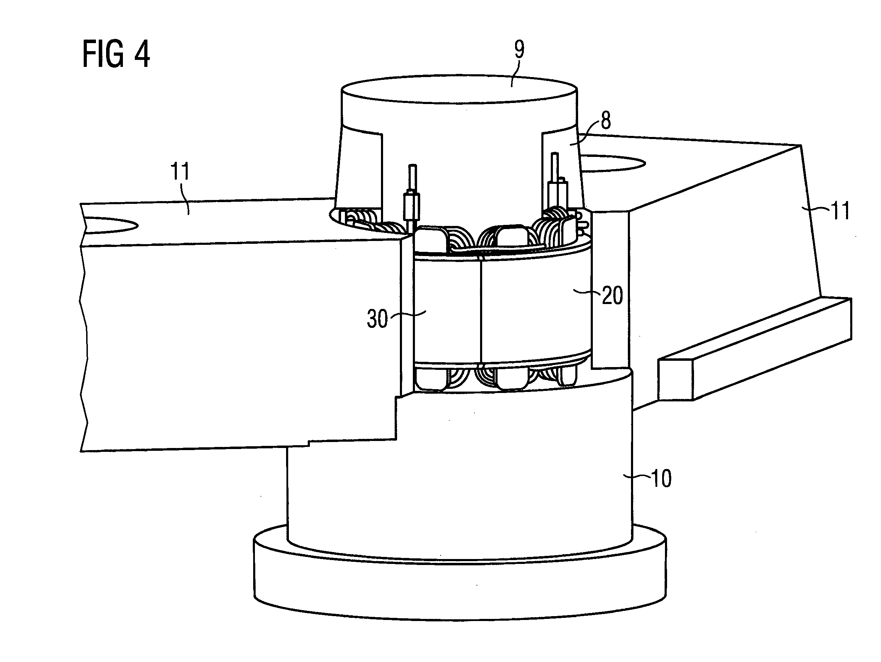

Diese Spritzgießform ist in Figur 4 schematisch im teilweise geschnittenen Zustand dargestellt und weist im Wesentlichen einen Boden 10, einen Deckel 9 sowie seitliche, einen Teil der Form bildende Formschieber 11 auf. Mit diesen Formschiebern 11 wird die in der Spritzgießform angeordnete Polzahn-Baugruppe 20 beim Schließen der Spritzgießform 8 zentriert und auf den gewünschten Durchmesser gebracht. Mit Hilfe eines Spritzgießprozesses, bei dem eine geeignete Kunststoffmasse in die Kavität der Form 8 eingespritzt wird, wird die in der Spritzgießform 8 angeordnete Polzahn-Baugruppe 20 schließlich umgossen. Dabei wird, wie in Figur 4 gezeigt, der Zwischenraum zwischen den einzelnen Wicklungen 7 der Polzähne 1 vergossen. Ferner wird der Raum oberhalb und unterhalb der Polzähne 1 bzw. Polzahnwicklungen 7 vergossen, so dass durchlaufende ringförmige Endwände 21, 22 bzw. entsprechende ringförmige Abschnitte gebildet werden.

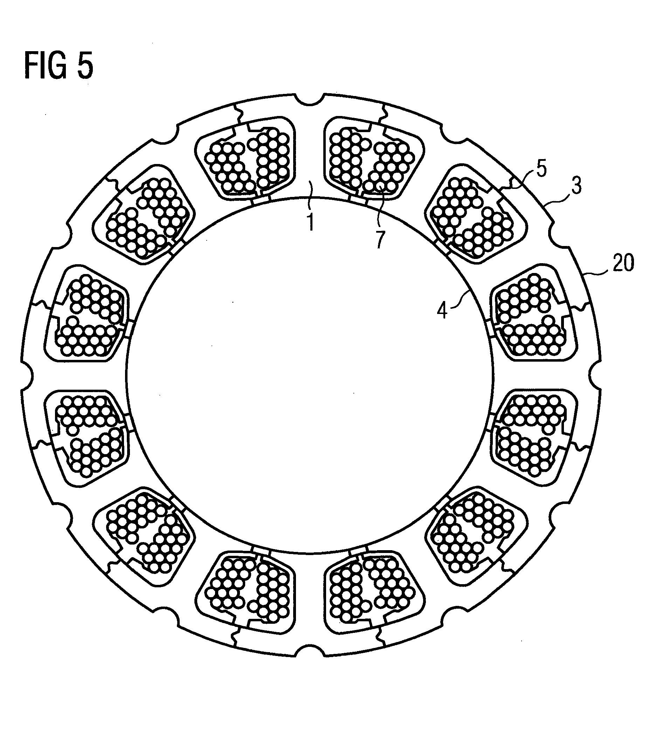

Figur 5 zeigt einen Querschnitt durch eine Polzahn-Baugruppe 20, nachdem diese zentriert und auf den gewünschten Durchmesser gebracht worden ist. Man erkennt, dass in diesem Endzustand benachbarte Polzähne 1 über die entsprechenden Nut-Feder-Verbindungen 5 aneinander fixiert sind.

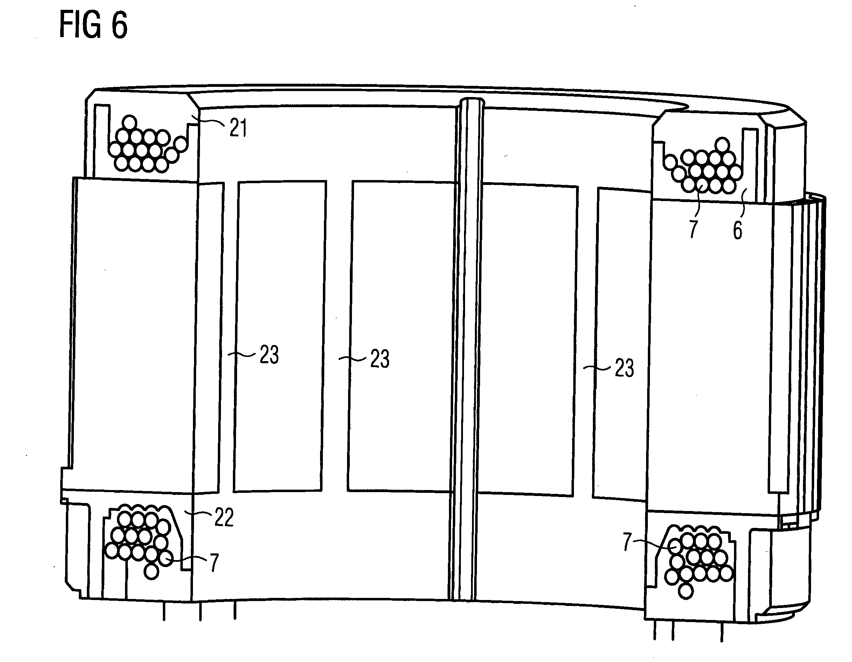

Figur 6 zeigt einen Längsschnitt durch einen fertigen umgossenen Stator. Hierbei ist die Polzahn-Baugruppe 20 in ein durch den Spritzgießprozess erzeugtes Kunststoffgerüst eingebettet, das sich im Wesentlichen aus Zwischenwänden 23 zwischen den Wicklungen 7 benachbarter Polzähne 1, einer oberen durchlaufenden ringförmigen Endwand 21 und einer unteren durchlaufenden ringförmigen Endwand 22 zusammensetzt. Die Endwände bzw. ringförmigen Abschnitte 21, 22 bilden eine obere und untere Einkapselung der Polzahnenden bzw. Kunststoffkappen 6. Die Außenflächen der inneren und äußeren Stirnwände 4, 3 bleiben blank und sind nicht mit Kunststoff umgossen.

## Patentansprüche

1. Verfahren zur Herstellung eines Stators für eine elektrische Maschine als Innenläufer, insbesondere einen Elektromotor, mit den folgenden Schritten:
a) Bereitstellen einer Vielzahl von separaten Polzähnen (1), die eine erste und zweite Stirnwand (3, 4) und einen diese verbindenden Polzahnsteg (2) aufweisen;
b) Bewickeln der Polzähne (1) zur Herstellung einer den Polzahnsteg (2) umgreifenden Wicklung (7),
c) Erstellen einer flexiblen ringförmigen Polzahn-Baugruppe (20);
d) Einbringen der flexiblen ringförmigen Polzahn-Baugruppe (20) in eine Spritzgießform und Zentrieren der Polzahn-Baugruppe (20) in derselben;
e) Umgießen der Polzahn-Baugruppe (20) mit einer Kunststoffmasse derart, dass die Bereiche zwischen den Polzähnen (1) und über und unter den Polzähnen (1) zur Ausbildung von durchlaufenden Endwänden (21, 22) ausgegossen werden, wobei die flexible ringförmige Polzahn-Baugruppe (20) vor dem Einbringen in die Spritzgießform durch die Anbringung eines Außenringes stabilisiert wird, der Außenring nach dem Einbringen in die Spritzgießform wieder entfernt wird und die Polzahn-Baugruppe (20) nach dem Einbringen in die Spritzgießform auf den gewünschten Durchmesser gebracht wird, **dadurch gekennzeichnet, dass** die separaten Polzähne (1) einzeln bewickelt und die Wicklungsdrahtenden der Polzähne (1) zur Erstellung der flexiblen ringförmigen Polzahn-Baugruppe (20) verbunden werden und dass die Polzähne (1) einer Polzahn-Baugruppe (20) über Nut-Feder-Verbindungen (5) formschlüssig miteinander verbunden werden, nachdem sie in der Spritzgießform zentriert und auf den gewünschten Durchmesser gebracht worden sind.

2. Verfahren nach Anspruch 1, **dadurch gekennzeichnet, dass** die Vielzahl der Polzähne (1) vor dem Bewickeln zur Isolation mit mindestens einer Schutzkappe (6) versehen wird.

3. Verfahren nach Anspruch 1 oder 2, **dadurch gekennzeichnet, dass** die Wicklungsdrahtenden der Polzähne (1) über einen Schweißprozess miteinander verbunden werden.

4. Verfahren nach Anspruch 1, **dadurch gekennzeichnet, dass** die Vielzahl der Polzähne (1) vor dem Bewickeln zur Isolation mit einer Überspritzung versehen wird.

## Claims

1. Method for producing a stator for an internal-rotor electric machine, in particular an electric motor, comprising the following steps:
a) providing a multiplicity of separate pole teeth (1), which have a first end-face wall (3) and a second end-face wall (4) and a pole tooth web (2) connecting said end-face walls;
b) wrapping the pole teeth (1) so as to produce a winding (7) enveloping the pole tooth web (2);
c) producing a flexible ring-shaped pole tooth assembly (20) ;
d) introducing the flexible ring-shaped pole tooth assembly (20) into an injection mould and centring the pole tooth assembly (20) therein;
e) encapsulating the pole tooth assembly (20) by casting with a plastic compound such that the regions between the pole teeth (1) and above and below the pole teeth (1) are plugged so as to form continuous end walls (21, 22), wherein the flexible ring-shaped pole tooth assembly (20) is stabilized by the attachment of an outer ring prior to the introduction into the injection mould, the outer ring is removed again after the introduction into the injection mould, and the pole tooth assembly (20) is brought to the desired diameter after the introduction into the injection mould, **characterized in that** the separate pole teeth (1) are individually wrapped and the winding wire ends of the pole teeth (1) are connected so as to produce the flexible ring-shaped pole tooth assembly (20), and **in that** the pole teeth (1) of a pole tooth assembly (20) are connected to one another in a form-fitting manner via tongue-and-groove joints (5) once they have been centred in the injection mould and brought to the desired diameter.

2. Method according to Claim 1, **characterized in that** the multiplicity of pole teeth (1) is provided with at least one protective cap (6) prior to the wrapping for insulation purposes.

3. Method according to Claim 1 or 2, **characterized in that** the winding wire ends of the pole teeth (1) are connected to one another via a welding process.

4. Method according to Claim 1, **characterized in that** the multiplicity of pole teeth (1) is provided with an over-moulding prior to the wrapping for insulation purposes.

## Revendications

1. Procédé de fabrication d'un stator pour une machine électrique comme induit intérieur, notamment d'un moteur électrique, ayant les stades suivantes :
a) on se procure une pluralité de dents (1) polaires distinctes, qui ont une première et une deuxième parois (3, 4) frontales et une âme (2) de dent polaire les reliant ;
b) on enroule les dents (1) polaires pour la fabrication d'un enroulement (7) enveloppant l'âme (2) de la dent polaire ;
c) on agence un module (20) annulaire souple de dent polaire ;
d) on met le module (20) annulaire souple de dent polaire dans un moule de moulage par injection et on y centre le module (20) de dent polaire ;
e) on coule autour du module (20) de dent polaire une composition de matière plastique, de manière à remplir les parties, entre les dents (1) polaires et au-dessus et en dessous des dents (1) polaires, pour la formation de parois (21, 22) d'extrémité continues, le module (20) annulaire souple de dent polaire étant, avant d'être mis dans le moule de moulage par injection, stabilisé par le montage d'un anneau extérieur, l'anneau extérieur étant retiré après la mise dans le moule de moulage par injection et le module (20) de dent polaire étant, après avoir été mis dans le moule de moulage par injection, mis au diamètre souhaité, **caractérisé en ce qu'**on enroule individuellement les dents (1) polaires distinctes et on relie les extrémités de fil d'enroulement des dents (1) polaires pour obtenir le module (20) annulaire souple de dent polaire et **en ce qu'**on relie entre elles, par complémentarité de forme, par des liaisons (5) à tenon et mortaise, les dents (1) polaires d'un module (20) de dent polaire, après qu'elles ont été centrées dans le moule de moulage par injection et mises au diamètre souhaité.

2. Procédé suivant la revendication 1, **caractérisé en ce qu'**on munit la pluralité des dents (1) polaires, avant enroulement, pour l'isolation d'au moins une coiffe (6) de protection.

3. Procédé suivant la revendication 1 ou 2, **caractérisé en ce qu'**on relie entre elles les extrémités du fil d'enroulement des dents (1) polaires par une opération de soudage.

4. Procédé suivant la revendication 1, **caractérisé en ce qu'**on munit d'un surmoulage pour l'isolation la pluralité de dents (1) polaires avant l'enroulement.
